# EUROPÄISCHE PATENTANMELDUNG

(11) **EP 4 227 052 A1**
(43) Veröffentlichungstag der Anmeldung: **16.08.2023**
(21) Anmeldenummer: 23155483.3
(22) Anmeldetag: 08.02.2023
(51) Int. Cl.: B28B 11/04, B05C 3/09, B05C 13/02, B25J 11/00

(54) **TAUCHGLASIEREN VON SANITÄRKERAMIK**

(30) Priorität: 11.02.2022 DE 102022103202
(71) Anmelder: Lippert GmbH & Co. KG, 92690 Pressath (DE)
(72) Erfinder: SEER, Alois, 92727 Waldthurn (DE)
(74) Vertreter: Louis Pöhlau Lohrentz

(57) **Zusammenfassung**

Es wird ein Verfahren zum Glasieren von Sanitärkeramik vorgeschlagen, wobei auf einem auswechselbaren Gestell (3) zumindest ein zu glasierender Rohling (4) einer Sanitärkeramik angeordnet wird und in ein mit Glasur (21) gefülltes Tauchbecken (2) eingetaucht wird. Um ein automatisiertes Tauchglasieren bei hoher Qualität und hohem Durchsatz zu ermöglichen, wird vorgeschlagen, dass das auswechselbare Gestell (3) an einem Roboterarm (11) und/oder Linearantrieb mittels einer Wechselvorrichtung (12) montiert wird. Das auswechselbare Gestell (3) wird mit dem zumindest einen darauf angeordneten zu glasierenden Rohling (4) mittels des Roboterarms (11) und/oder des Linearantriebs in einer linearen geradlinigen Bewegung in die Glasur (21) des Tauchbeckens (2) eingetaucht und/oder aus der Glasur (21) entnommen.

## Beschreibung

Die Erfindung betrifft ein Verfahren zum Glasieren von Sanitärkeramik gemäß den Merkmalen des Oberbegriffs des Anspruchs 1.

In der Praxis werden Rohlinge von Sanitärkeramik im Sprühverfahren glasiert. Dazu wird manuell oder automatisch eine Sprühpistole verwendet, um die Glasur auf den Rohling aufzutragen.

Aus der WO 20018/042399 A1 ist ein entsprechendes Sprühglasierverfahren für Sanitärkeramik bekannt. Nachteil einer Sprühglasierung ist ein hoher Materialverbrauch der Glasur, der beispielsweise durch Overspray hervorgerufen wird, und zudem in bestimmten Bereichen eine gegenüber einem Tauchglasieren verringerte Oberflächenqualität hervorruft.

Ein Tauchglasieren von Sanitärkeramik ist aufgrund der Größe und des Gewichts der Rohlinge kaum oder nur unter ganz speziellen Voraussetzungen möglich.

So ist aus dem Dokument CN 108407059 A ein Verfahren zum Tauchglasieren eines Waschbeckens bekannt. Dort muss aber ein spezieller Halter eingesetzt werden, um das Waschbecken zu halten und in einem Tauchbecken zu glasieren. Ferner ist eine auf das zu glasierende Waschbecken abgestimmte Tauchglasieranlage notwendig.

Der vorliegenden Erfindung liegt die Aufgabe zugrunde, ein universell einsetzbares Tauchglasierverfahren für Sanitärkeramik zu schaffen, bei dem eine hohe Qualität der Glasur möglich ist und zugleich ein hoher Durchsatz erzielt wird. Zudem sollen durch das Verfahren aufwändige Instandhaltungsarbeiten und Absaugungen reduziert werden bzw. entfallen können.

Diese Aufgabe wird erfindungsgemäß durch ein Verfahren zum Glasieren von Sanitärkeramik mit den Merkmalen des Anspruchs 1 sowie durch eine Tauchglasiervorrichtung für Sanitärkeramik mit den Merkmalen des Anspruchs 10 gelöst.

Erfindungsgemäß ist ein Verfahren zum Glasieren von Sanitärkeramik vorgesehen, wobei auf einem auswechselbaren Gestell zumindest ein zu glasierender Rohling einer Sanitärkeramik angeordnet wird und in ein mit Glasur gefülltes Tauchbecken eingetaucht wird. Wesentlich dabei ist, dass das auswechselbare Gestell an einem Roboterarm und/oder Linearantrieb mittels einer Wechselvorrichtung montiert wird und wobei das auswechselbare Gestell mit dem zumindest einen darauf angeordneten zu glasierenden Rohling mittels des Roboterarms und/oder des Linearantriebs in einer linearen geradlinigen Bewegung in die Glasur des Tauchbeckens eingetaucht wird und/oder aus der Glasur entnommen wird.

Erfindungsgemäß ist auch eine Tauchglasiervorrichtung für Sanitärkeramik vorgesehen, mit einem auswechselbaren Gestell, auf dem zumindest ein zu glasierender Rohling angeordnet ist, und mit einem Tauchbecken mit Glasur, um den zumindest einen Rohling durch Eintauchen in das Tauchbecken zu glasieren. Wesentlich dabei ist, dass das auswechselbare Gestell an einem Roboterarm und/oder Linearantrieb mittels einer Wechselvorrichtung montiert ist und dass eine Steuerungsvorrichtung vorgesehen ist, die den Roboterarm und/oder den Linearantrieb derart steuert, dass der Roboterarm und/oder der Linearantrieb mittels einer linearen geradlinigen Bewegung das auswechselbare Gestell mit dem zumindest einen darauf angeordneten zu glasierenden Rohling in die Glasur des Tauchbeckens eintaucht und/oder aus der Glasur entnimmt.

Durch die lineare geradlinige Eintauchbewegung bzw. Austauchbewegung können wartungsarme Maschinenkomponenten, wie beispielsweise Linearantriebe oder Roboterarme, verwendet werden. Der Glasiervorgang ist somit weniger störungsanfällig und Instandhaltungsmaßnahmen werden reduziert. Zudem wird durch die lineare geradlinige Eintauchbewegung bzw. Austauchbewegung ein gutes Glasurergebnis ohne Fehlstellen erreicht. Durch die vergleichsweise einfach gehaltene Eintauchbewegung bzw. Austauchbewegung wird gleichbleibende hohe Qualität des Glasurauftrags auch bei hohen Stückzahlen gewährleistet. Zudem ist es möglich mehrere Rohlinge einer Produktkategorie oder auch mehrere Rohlinge unterschiedlicher Produktkategorien im Gestell anzuordnen und zu glasieren. Der Durchsatz wird dadurch erhöht und der Glasurvorgang kann variabel unabhängig von der Art der Rohlinge stets durchgeführt werden, da keine artikelspezifischen Ein- und Austauchbewegungen nötig sind.

Vorzugsweise wird unter Sanitärkeramik bzw. Badkeramik eine Gebrauchskeramik verstanden, wie beispielsweise Waschtische und/oder Waschbecken und/oder WC-Schüsseln und/oder sonstige Gebrauchsgegenstände, die im Wesentlichen aus Keramik bestehen. Ein Merkmal von Sanitärkeramik und/oder Badkeramik ist beispielsweise, dass Sanitärkeramik oder Badkeramik fest installiert ist, beispielsweise an einer Wand montiert und/oder auf einer Bodenfläche stehend montiert wird. Im Gegensatz zu sonstiger Keramik wie beispielsweise Geschirr, oder Laborkeram ik.

Das Gewicht eines Rohlings aus Sanitärkeramik kann mehr als 3 kg, vorzugsweise mehr als 4 kg, höchst vorzugsweise mehr als 5 kg betragen. Das Maximalgewicht eines Rohlings kann bis zu 50 kg oder 60 kg betragen. Insbesondere ist der Roboterarm und/oder der Linearantrieb für das entsprechende Gewicht der Sanitärkeramik ausgelegt.

Insbesondere kann vorgesehen sein, dass bei einem Tauchglasiervorgang bzw. je Tauchglasiervorgang genau ein Rohling in die Glasur eingetaucht wird. Das Gestell kann jedoch auch zwei Rohlinge oder mehrere Rohlinge aufnehmen, so dass bei einem Tauchglasiervorgang zwei Rohlinge oder mehrere Rohlinge zeitgleich glasiert werden können.

Als Glasur kann eine keramische Tauchglasur verwendet werden.

Vorzugsweise ist der Roboterarm und/oder Linearantrieb Teil eines Mehrachsroboters. Insbesondere wird unter einem Mehrachsroboter ein fest installierter, beweglich angetriebener Roboter verstanden, der frei programmierbar ist und wenigstens drei rotatorisch angetriebene Achsen aufweist. Insbesondere kann ein Fünfachsroboter oder ein Sechsachsroboter oder ein Siebenachsroboter verwendet werden. Auch ein entsprechender Knickarmroboter kann verwendet werden.

In einer Ausgestaltung kann vorgesehen sein, dass der zumindest eine zu glasierende Rohling manuell und/oder maschinell in dem auswechselbaren Gestell angeordnet wird.

Vorzugsweise kann das Gestell als Korb, oder als Gabel mit mehreren parallelen Zinken als Auflagefläche für den wenigstens einen zu glasierenden Rohling, oder als Wanne mit entsprechenden Öffnungen für die Glasur ausgebildet sein. Wesentlich ist, dass das Gestell ausreichende Festigkeit aufweist, um den zu glasierenden Rohling oder die zu glasierenden Rohlinge zu halten und zugleich ein Einströmen der Glasur in das Gestell bzw. ein Ausströmen der Glasur aus dem Gestell möglichst wenig zu behindern.

Insbesondere kann das Gestell eine automatische Kupplung aufweisen, um das Gestell an den Roboterarm und/oder den Linearantrieb automatisch anzukuppeln bzw. abzukuppeln.

Um den zumindest einen Rohling gegen Aufschwimmen und/oder Verrutschen und/oder Umkippen zu sichern, ist es bevorzugt vorgesehen, dass der zumindest eine zu glasierende Rohling mittels Klemmen und/oder Sauger, insbesondere Vakuumsauger, in dem auswechselbaren Gestell gehaltert wird. Insbesondere ist es möglich, dass das austauschbare Gestell für den zumindest einen Sauger, insbesondere Vakuumsauger, und/oder die zumindest eine Klemme einen entsprechenden Haltemechanismus aufweist, an denen der Sauger und/oder die Klemme befestigt sind. Mittels des Saugers und/oder der Klemme wird der zumindest eine Rohling vorzugsweise am Boden des austauschbaren Gestells fixiert.

Bevorzugt ist es vorgesehen, den zumindest einen Sauger und/oder die zumindest eine Klemme in regelmäßigen Abständen, insbesondere nach jedem Wechsel der Rohlinge, zu säubern. Hierunter ist zu verstehen, dass die Sauger und/oder die Klemmen von Glasur befreit werden, damit an dem neuen zu glasierenden Rohling keine unerwünschten, lokalen Glasuransammlungen entstehen. Das Säubern des zumindest einen Saugers und/oder der zumindest einen Klemme kann manuell oder maschinell erfolgen.

Bevorzugt ist, dass die Tauchglasiervorrichtung einen Vakuumerzeuger aufweist, insbesondere welcher an dem auswechselbaren Gestell oder dem Roboterarm und/oder dem Linearantrieb angeordnet ist, wobei der Vakuumerzeuger mittels einer Leitung mit dem zumindest einen Sauger, insbesondere Vakuumsauger, verbunden ist. Bei dem Vakuumerzeuger kann es sich beispielsweise um eine Membranpumpe handeln. Der Vakuumerzeuger ist dabei derart angeordnet, sodass bei Eintauchen des auswechselbaren Gestells in die Glasur der Vakuumerzeuger nicht mit in die Glasur eintaucht. Es ist auch von Vorteil, wenn der Vakuumerzeuger einen Spritzschutz aufweist. Somit wird der sichere Betrieb des Vakuumerzeugers gewährleistet und daraus folgend einen sicheren Halt der Rohlinge im austauschbaren Gestell garantiert.

In einer Ausgestaltung kann vorgesehen sein, dass die Steuerungsvorrichtung das Vakuum der Vakuumpumpe und/oder des Saugers, insbesondere Vakuumsaugers, überwacht, um ein ordnungsgemäßes Halten des Rohlings zu gewährleisten.

Vorzugsweise weist der zumindest eine zu glasierende Rohling eine nicht zu glasierende Fläche auf, welche als Auflagefläche am Gestell dient. Bevorzugt wird die nicht zu glasierende Fläche mitglasiert und nach dem Glasieren abgeschwammt. Durch das Abschwammen wird überschüssige Glasur am Rohling entfernt bzw. Flächen, die nicht mit Glasur versehen sein sollen, von Glasur befreit. Bei Sanitärkeramik ist die Auflagefläche insbesondere diejenige Fläche, die bei der fertigen Sanitärkeramik als Montagefläche dient. Üblicherweise wird die Montagefläche einer Sanitärkeramik an einer Wand, auf einem Boden oder auf einem Tisch montiert bzw. angeordnet. Die Montagefläche ist daher bei Gebrauch der Sanitärkeramik nicht sichtbar.

In einer weiteren Ausgestaltung kann vorgesehen sein, dass das auswechselbare Gestell mit dem darin angeordneten zumindest einen Rohling unter einen vordefinierten Eintauchwinkel in die Glasur eingetaucht wird und/oder unter einem vordefinierten Austauchwinkel aus der Glasur entnommen wird. Der Ein- und Austauchwinkel richtet sich dabei nach den Flächen des Rohlings und wird so gewählt, dass an sehr steilen Flächen des Rohlings keine Tropfenbildung entsteht. Zudem werden durch ein Eintauchen unter einem vordefinierten Eintauchwinkel Blasenbildung und Lufteinschlüsse in der Glasur verhindert. Beispielsweise kann es sich bei dem Ein- und Austauchwinkel um einen Rollwinkel und/oder Nickwinkel und/oder Gierwinkel und/oder Kombinationen daraus handeln. Als Rollwinkel wird derjenige Winkel bezeichnet, der eine Verdrehung um die Bewegungsachse hervorruft. Die Bewegungsachse zeigt dabei in positive Richtung der linearen geradlinigen Bewegung. Als Nickwinkel wird derjenige Winkel bezeichnet, der eine Verdrehung um eine seitlich zur Bewegungsachse senkrecht stehende Achse hervorruft. Als Gierwinkel wird derjenige Winkel bezeichnet, der eine Verdrehung um eine nach oben oder unten zur Bewegungsachse senkrecht stehende Achse hervorruft.

Insbesondere ist vorgesehen, dass die Steuerungsvorrichtung den Roboterarm und/oder den Linearantrieb derart ansteuert, dass der Roboterarm und/oder der Linearantrieb das auswechselbare Gestell mit dem darin angeordneten zumindest einen Rohling unter einem vordefinierten Eintauchwinkel in die Glasur eintaucht und/oder unter einem vordefinierten Austauchwinkel aus der Glasur entnimmt. Mit der Steuerungsvorrichtung kann der Ein- und Austauchwinkel der Rohlinge artikelspezifisch eingestellt werden, sodass die Benetzung einer Oberfläche des Rohlings mit Glasur unterstützt und/oder verbessert wird. Dadurch wird sichergestellt, dass der Rohling allseitig von der Glasur umschlossen wird und somit auch eine hohe Qualität der Glasur erzielt wird.

Ferner kann vorgesehen sein, dass das auswechselbare Gestell mit einer vordefinierten Geschwindigkeit mittels des Roboterarms und/oder des Linearantriebs eingetaucht wird und/oder entnommen wird, insbesondere wobei die vordefinierte Geschwindigkeit in einem Bereich von 50 mm/s bis 150 mm/s, bevorzugt von 80 mm/s bis 120 mm/s liegt. Durch eine derartige Geschwindigkeit wird sichergestellt, dass die Glasur alle Flächen des Rohlings vollständig benetzt. Insbesondere ist es vorgesehen, dass die Steuerungsvorrichtung den Roboterarm und/oder den Linearantrieb derart ansteuert, dass der Roboterarm und/oder der Linearantrieb das auswechselbare Gestell mit einer vordefinierten Geschwindigkeit eintaucht und/oder entnimmt, insbesondere wobei die vordefinierte Geschwindigkeit in einem Bereich von 50 mm/s bis 150 mm/s, bevorzugt von 80 mm/s bis 120 mm/s liegt. Auch hier kann mittels der Steuerungsvorrichtung die Ein- und Austauchgeschwindigkeit artikelspezifisch gewählt werden, sodass ein bestmöglicher Glasurauftrag erzielt wird.

In einer Ausgestaltung kann vorgesehen sein, dass die Steuerungsvorrichtung einen artikelspezifischen Speicher aufweist, um für den jeweiligen Artikel die optimale Eintauchgeschwindigkeit und/oder Austauchgeschwindigkeit und/oder Eintauchwinkel und/oder Austauchwinkel zu wählen. Dadurch wird eine schnelle Umrüstung auf einen neuen Artikel ermöglicht.

Es ist bevorzugt auch möglich, dass die vordefinierte Geschwindigkeit während des Tauchglasierens beschränkt wird, um die auftretenden Kräfte zu begrenzen. Aufgrund des Gewichts und/oder der Abmessungen des Rohlings für Sanitärkeramik treten während des Eintauchens des Rohlings in das Tauchbecken mit der Glasur relativ hohe Kräfte auf. Um ein Abreißen des Rohlings aus dem austauschbaren Gestell zu verhindern, kann vorgesehen sein, die Geschwindigkeit der Tauchbewegung auf eine bestimmte bzw. vorgebbare Maximalgeschwindigkeit zu beschränken, um einen Abriss oder eine Beschädigung des Rohlings zu verhindern.

In einer Ausgestaltung kann vorgesehen sein, dass der zumindest eine zu glasierende Rohling nach dem Eintauchen in das Tauchbecken für eine vorbestimmte Zeitdauer in der Glasur verweilt, insbesondere wobei die vorbestimmte Zeitdauer in einem Bereich von 2 s bis 10 s, bevorzugt von 4 s bis 6 s, liegt. Hierfür ist bevorzugt vorgesehen, dass die Steuerungsvorrichtung den Roboterarm und/oder den Linearantrieb entsprechend ansteuert. Eine derartige Verweildauer im Tauchbecken sorgt dafür, dass sich die Glasur ausreichend am Rohling vernetzt, sodass eine gewisse Glasurdicke erreicht wird.

Bevorzugt ist, dass der zumindest eine zu glasierende Rohling mehrmals hintereinander in das Tauchbecken eingetaucht und/oder aus dem Tauchbecken herausgenommen wird, wobei eine vordefinierte Verweilzeit außerhalb der Glasur vorgesehen ist, welche in einem Bereich von 1 s bis 10 s, insbesondere von 2 s bis 5 s liegt. Es ist insbesondere auch möglich, dass die Steuerungsvorrichtung den Roboterarm und/oder den Linearantrieb derart ansteuert, dass der Roboterarm und/oder der Linearantrieb den zumindest einen zu glasierenden Rohling mehrmals in das Tauchbecken eintaucht und/oder aus dem Tauchbecken entnimmt, wobei eine vordefinierte Verweilzeit außerhalb der Glasur vorgesehen ist, welche in einem Bereich von 1 s bis 10 s, insbesondere von 2 s bis 5 s liegt. Bei Versuchen hat sich gezeigt, dass ein mehrmaliges Eintauchen in die Glasur mit einer derartigen Verweilzeit außerhalb der Glasur die Glasurschicht deutlich verstärkt. Bei einem einmaligen Eintauchen kann in etwa eine Glasurdicke von 0,3 mm erreicht werden. Auch bei einer längeren Verweilzeit in der Glasur wird bei einem einmaligen Eintauchen keine stärkere Glasurdicke erreicht. Mithilfe des mehrmaligen Eintauchens können Glasurdicken im Bereich von 0,5 mm bis 1 mm, bevorzugt von 0,6 mm bis 0,8 mm erzielt werden. Dies ist darauf zurückzuführen, dass durch die Verweilzeit außerhalb der Glasur, die bereits aufgetragene Glasur zumindest teilweise vortrocknet und somit wieder weitere Glasur aufgenommen bzw. aufgetragen werden kann. Als optimal hat sich vorzugsweise eine Tauchhäufigkeit von viermal erwiesen. Ferner hat sich auch herausgestellt, dass nach einmaligem Eintauchen durch Luftblasen glasurfreie Stellen entstehen können. Durch das mehrmalige Eintauchen in die Glasur können diese glasurfreien Stellen reproduzierbar verschwinden. Darüber hinaus kann von dem zumindest einen entnommenen Rohling während der Verweilzeit außerhalb der Glasur überschüssige Glasur wieder zurück in das Tauchbecken ablaufen.

In einer Ausgestaltung kann vorgesehen sein, dass nach dem Tauchglasieren der zumindest eine fertig glasierte Rohling manuell und/oder maschinell aus dem auswechselbaren Gestell entnommen wird, und/oder dass der zumindest eine fertig glasierte Rohling an seiner Auflagefläche manuell und/oder maschinell abgeschwammt wird. Bei dem erfindungsgemäßen Verfahren kann es beim fertig glasierten Rohling zu Tropfenbildung kommen. Wie Versuche gezeigt haben, tritt diese Tropfenbildung jedoch nur an Auflageflächen oder Flächen, die ohnehin glasurfrei sein müssen auf. Deswegen ist es nötig, diese Flächen abzuschwammen, um überschüssige Glasur zu entfernen und diese Flächen von Glasur zu befreien. Bei den Sichtflächen, sogenannte "A-Flächen", wird durch das erfindungsgemäße Verfahren Tropfenbildung zuverlässig vermieden, weshalb bei den Sichtflächen kein Abschwammen nötig ist.

Bevorzugt ist es möglich, dass das auswechselbare Gestell mit dem zumindest einen fertig glasierten Rohling mittels der Wechselvorrichtung an einem Trocknungsplatz zum Antrocknen der Glasur abgestellt wird und anschließend ein weiteres auswechselbares Gestell mit zumindest einen zu glasierenden Rohling mittels der Wechselvorrichtung an den Roboterarm und/oder dem Linearantrieb montiert wird bzw. aufgenommen wird. Bevorzugt ist hierfür vorgesehen, dass die Steuerungsvorrichtung den Roboterarm und/oder den Linearantrieb derart ansteuert, dass der Roboterarm und/oder der Linearantrieb das auswechselbare Gestell mit dem zumindest einen fertig glasierten Rohling mittels der Wechselvorrichtung an einem Trocknungsplatz zum Antrocknen der Glasur abstellt und/oder ein weiteres auswechselbares Gestell mit zumindest einen zu glasierenden Rohling mittels der Wechselvorrichtung an den Roboterarm und/oder dem Linearantrieb aufnimmt. Dadurch können, während die glasierten Rohlinge trocknen, bereits neue zu glasierende Rohlinge glasiert werden. Damit kann die Stückzahl bzw. der Durchsatz pro Zeiteinheit weiter erhöht werden.

Vorzugsweise beträgt die Trocknungszeit zwischen 30 Sekunden und 180 Sekunden.

Vorzugsweise ist die Wechselvorrichtung derart ausgestaltet, sodass diese völlig automatisiert das auswechselbare Gestell aufnehmen und abgeben kann. Dadurch werden manuelle Handhabungen reduziert, und es wird der Durchsatz weiter erhöht. In einer möglichen Ausgestaltung kann vorgesehen sein, dass das auswechselbare Gestell manuell per Hand an der Wechselvorrichtung montiert und/oder demontiert wird.

Mit der Erfindung können Sanitärkeramiken auf einfache Art und Weise in hohen Stückzahlen glasiert werden. Die Erfindung kann beispielsweise bei der vollautomatisierten aber auch semiautomatisierten Herstellung von Sanitärkeramikartikeln verwendet werden. Besonders vorteilhaft ist, dass zeitgleich mehrere Rohlinge eines Typs und auch mehrere Rohlinge unterschiedlichen Typs bei hoher Fertigungsqualität und hohem Durchsatz glasiert werden können. Gleichzeitig werden unnötige Materialkosten und Instandhaltungskosten vermieden, da bei dem erfindungsgemäßen Verfahren kein Overspray von Glasur, wie es bei herkömmlichen Sprühglasierverfahren für Sanitärkeramik zwangsläufig vorkommt, auftritt und zudem wartungsarme Antriebe und Mechaniken eingesetzt werden können.

Die Beschreibung der Erfindung umfasst sowohl Vorrichtungsmerkmale wie auch Verfahrensmerkmale und Anordnungsmerkmale. Für den Fachmann ist es selbstverständlich, dass es sich bei dem Verfahren und der Vorrichtung um eine einzige Erfindung handelt, und dass die Vorrichtungsmerkmale bzw. Anordnungsmerkmale auch für das Verfahren gelten, bzw. dass die Verfahrensmerkmale auch für die Vorrichtung gelten.

Weitere Ausgestaltungen der Erfindung sind in den Figuren gezeigt und in der nachfolgenden Figurenbeschreibung beschrieben. Dabei zeigen:
- **Fig. 1:**: eine Seitenansicht einer erfindungsgemäßen Tauchglasiervorrichtung im nicht eingetauchten Zustand;
- **Fig. 2:**: eine Seitenansicht einer erfindungsgemäßen Tauchglasiervorrichtung im eingetauchten Zustand;
- **Fig. 3:**: eine Vorderansicht der Tauchglasiervorrichtung im nicht eingetauchten Zustand;
- **Fig. 4:**: eine Vorderansicht der Tauchglasiervorrichtung im eingetauchten Zustand;
- **Fig.5:**: eine schematische Vorderansicht eines Rohlings im austauschbaren Gestell mit Saugvorrichtung;
- **Fig. 6:**: eine schematische Vorderansicht eines Rohlings.

In den Figuren sind unterschiedliche Beispiele von Ausgestaltungen der Erfindung dargestellt. Dabei wurden gleiche oder gleich wirkende Komponenten jeweils mit denselben Referenzzeichen versehen. Wo die in den Figuren dargestellten Ausgestaltungen Gemeinsamkeiten aufweisen, wurde zur Vermeidung von Wiederholungen davon abgesehen, diese Gemeinsamkeiten mehrfach zu beschreiben. Die jeweiligen Unterschiede der Ausgestaltungen sind zu den Figuren jeweils beschrieben. Es versteht sich von selbst, dass der Fachmann innerhalb des Schutzbereichs der Ansprüche einzelne Ausgestaltungen abwandeln oder einzelne Merkmale dieser Ausgestaltungen miteinander kombinieren kann.

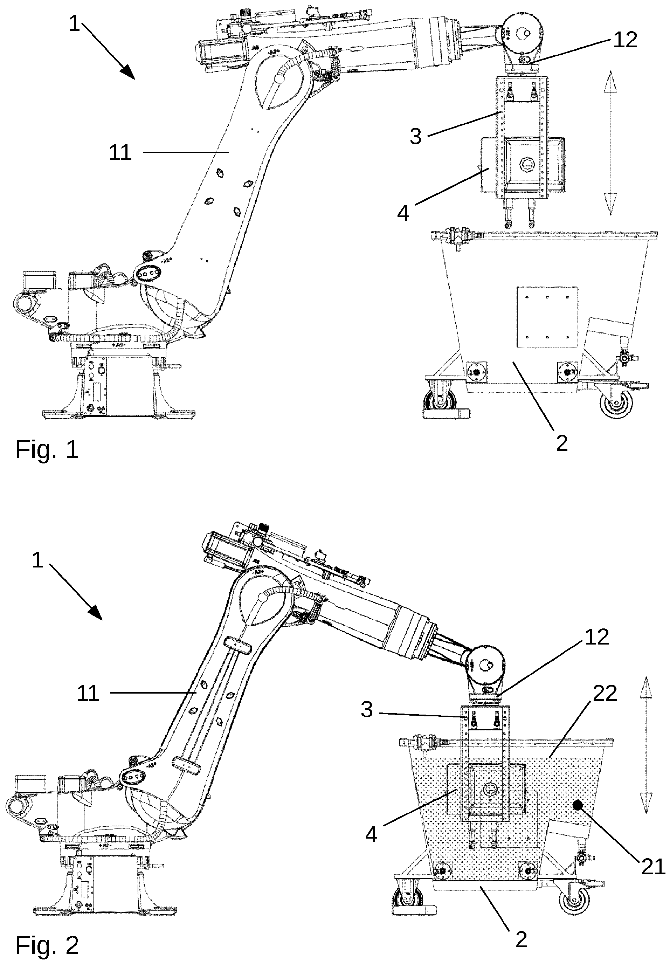

In der Fig. 1 ist eine erste Ausgestaltung einer erfindungsgemäßen Tauchglasiervorrichtung 1 in schematischer Seitenansicht gezeigt, wobei hier das Gestell 3 nicht in das Tauchbecken 2 eingetaucht ist.

Die Tauchglasiervorrichtung 1 weist einen Roboterarm 11 auf. Vorzugsweise handelt es sich hierbei um einen Roboterarm 11 eines Mehrachsroboters. Der Roboterarm 11 ist in der gezeigten ersten Ausgestaltung auf einem Sockel befestigt, welcher wiederum mit dem Boden, bevorzugt Hallenboden, befestigt ist.

Bei einer Ausgestaltung mit einem Mehrachsroboter ist es bevorzugt vorgesehen, dass der Mehrachsroboter in einer Roboterzelle eingefasst ist. D.h. die Roboterzelle weist eine Wand auf, um zu verhindern, dass während des Betriebs des Roboters Personen in den Gefahrenbereich gelangen können. Vorzugsweise sind in der Wand der Roboterzelle Türen vorgesehen, um eine Wartung oder Reinigung der Roboterzelle vornehmen zu können.

Wie in Fig. 1 gezeigt, ist am Ende des Roboterarms 11 eine Wechselvorrichtung 12 vorgesehen, mit der das austauschbare Gestell 3 aufgenommen wird. Die Wechselvorrichtung ermöglicht ein schnelles Aufnehmen und Abnehmen des austauschbaren Gestells 3. Die Wechselvorrichtung 12 kann das austauschbare Gestell 3 völlig automatisiert aufnehmen und abgeben. Hierfür ist eine nicht dargestellte Befestigungseinrichtung vorgesehen, die das austauschbare Gestell 3 an der Wechselvorrichtung 12 des Roboterarms 11 befestigt bzw. wieder löst. In bevorzugten Ausgestaltungen kann die Befestigung des austauschbaren Gestells 3 an der Wechselvorrichtung 12 auch per Hand vorgenommen werden.

Die Tauchglasiervorrichtung 1 weist zudem ein Tauchbecken 2 mit Glasur 21 auf. Dieses Tauchbecken 2 ist innerhalb der Reichweite des Roboterarms 11 angeordnet. In dieses Tauchbecken 2 wird das austauschbare Gestell 3 mit den darin angeordneten zu glasierenden Rohlingen 4 mittels einer linearen geradlinigen Bewegung, wie dies durch den Doppelpfeil gekennzeichnet ist, eingetaucht.

Die zu glasierenden Rohlinge 4 werden vorzugsweise manuell in das austauschbare Gestell 3 angeordnet. Dadurch kann ein kompliziertes Zuführ- und Abführsystem entfallen. Ein Bediener kann die Körbe manuell befüllen oder leeren. Es ist jedoch auch denkbar, dass die zu glasierenden Rohlinge 4 automatisch, insbesondere per Roboter, in das austauschbare Gestell 3 angeordnet werden.

Durch das Eintauchen der Rohlinge 4 in das Tauchbecken 2 bzw. die Glasur 21 werden die Rohlinge 4 glasiert. Während des Eintauchens wird der Rohling 4 von der Glasur 21 benetzt bzw. überzogen.

In Fig. 2 ist die Tauchglasiervorrichtung 1 aus Fig. 1 dargestellt, wobei das austauschbare Gestell 3 mit den darin angeordneten Rohlingen 4 im Tauchbecken 2 eingetaucht ist. Hierzu wird der Roboterarm 11 aus Fig. 1 derart verfahren, sodass das Gestell 3 in einer linearen geradlinigen Bewegung in die Glasur 21 eintaucht. Die Vernetzung der Glasur 21 an dem Rohling 4 beginnt, sobald der Rohling 4 durch den Glasurspiegel 22, welcher die Oberfläche der Glasur 21 im Tauchbecken 2 darstellt, durchtaucht. Das Eintauchen in die Glasur 21 bzw. Entnehmen aus der Glasur 21 mittels der linearen geradlinigen Bewegung erfolgt vorzugsweise mit einer vordefinierten Geschwindigkeit, welche bevorzugt in einem Bereich von 50 mm/s bis 150 mm/s, weiter bevorzugt von 80 mm/s bis 120 mm/s, liegt. Eine vordefinierte Geschwindigkeit in diesem Wertebereich ermöglicht eine vollständige und gleichmäßige Benetzung des Rohlings 4 mit Glasur 21.

Nach Ablauf einer vordefinierten Verweildauer des Rohlings 4 bzw. der Rohlinge 4 in der Glasur 21, welche insbesondere in einem Bereich von 2 s bis 10 s, bevorzugt von 4 s bis 6 s, liegt, wird das austauschbare Gestell 3 mit den darin angeordneten Rohlingen 4 wieder aus der Glasur 21 mittels einer linearen geradlinigen Bewegung entnommen. Die Geschwindigkeit des Austauchens entspricht dabei vorzugsweise auch der Eintauchgeschwindigkeit. Es ist jedoch auch möglich, dass die Eintauchgeschwindigkeit und die Austauchgeschwindigkeit unterschiedlich sind.

Durch das erstmalige Eintauchen der Rohlinge 4 in die Glasur 21 bildet sich vorzugsweise eine Glasurdicke von ca. 0,3 mm. Bei Versuchen hat sich gezeigt, dass durch ein mehrmaliges Eintauchen der Rohlinge 4 in die Glasur 21 mit einer vorbestimmten Verweilzeit außerhalb der Glasur 21 die Glasurdicke erheblich zunimmt. So können beispielsweise durch ca. drei bis vier Wiederholungen des Eintauchvorgangs Glasurdicken von 0,6 mm bis 0,7 mm erzielt werden.

Nach dem die gewünschte Glasurdicke erreicht ist, kann das austauschbare Gestell 3 mit den darin angeordneten glasierten Rohlingen 4 an einem nicht dargestellten Trocknungsplatz abgestellt werden. Während der Trocknungszeit kann der Roboterarm 11 ein weiteres Gestell 3 mit darin zu glasierenden Rohlingen 4 mittels der Wechselvorrichtung 12 aufnehmen und diese durch mehrmaliges Eintauchen in das Tauchbecken 2 glasieren. Dadurch kann der Durchsatz weiter erhöht werden.

Nach Ablauf der Trocknungszeit werden die glasierten Rohlinge 4 vorzugsweise manuell aus dem Gestell 3 entnommen und die Auflagefläche 41, welche keine Glasur 21 aufweisen soll, wird manuell abgeschwammt. Anschließend kann das Gestell 3 mit neuen zu glasierenden Rohlingen 4 bestückt werden.

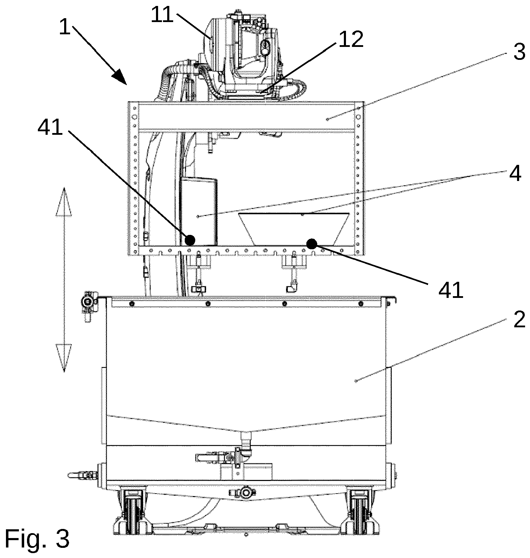

In Fig. 3 ist eine Vorderansicht der Tauchglasiervorrichtung 1 im nicht eingetauchten Zustand dargestellt. Die Rohlinge 4 sind derart in dem austauschbaren Gestell 3 angeordnet, sodass diese mit ihrer Auflagefläche 41 auf dem Boden des Gestells 3 aufliegen. Wie in Fig. 3 dargestellt, kann es sich bei den Rohlingen 4 auch um unterschiedliche Bauteile handeln, die zeitgleich im selben Prozess glasiert werden. Beispielweise handelt es sich bei dem linken Rohling 4 um ein Hängewaschbecken, dessen Auflagefläche 41 bei Montage zur Wand gerichtet ist. Wohingegen es sich bei dem rechten Rohling 4 beispielsweise um ein Aufsatzwaschbecken handelt, dessen Auflagefläche 41 bei Montage auf einen Tisch bzw. Waschtisch aufgesetzt wird. Das Glasieren von Rohlingen 4 unterschiedlicher Artikel ist dadurch möglich, dass lediglich eine lineare geradlinige Bewegung zum Eintauchen und Austauchen durchgeführt wird. Diese ist bevorzugt nicht artikelspezifisch und kann daher auch für unterschiedliche Artikel genutzt werden. Die Produktion kann deshalb variabler und individueller gestaltet werden.

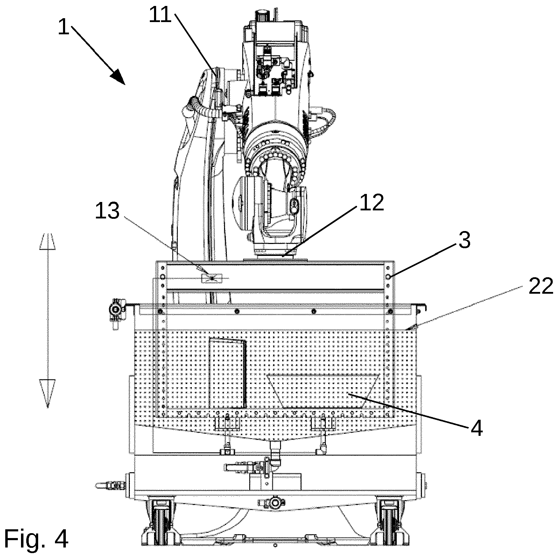

In Fig. 4 ist eine Vorderansicht der Tauchglasiervorrichtung 1 im nicht eingetauchten Zustand dargestellt. Hierzu wurde das in Fig. 3 dargestellte auswechselbare Gestell 3 mit den darin platzierten Rohlingen 4 mittels einer linearen geradlinigen Bewegung in das Tauchbecken 2 eingetaucht. Damit die Rohlinge 4 in Folge der Bewegung und auch der beim Eintauchen wirkenden Kräfte nicht verrutschen oder umkippen, sind die Rohlinge 4 an dem Gestell 3 befestigt. In der in Fig. 4 gezeigten Ausführung verfügt das austauschbare Gestell 3 über Vakuumsauger, die am Boden des Gestells angeordnet sind. Die Auflageflächen 41 der Rohlinge 4 werden auf die Vakuumsauger platziert. Das Vakuum wird über einen am Gestell 3 montierten Vakuumerzeuger, beispielsweise eine Membranpumpe, erzeugt. Der Vakuumerzeuger 13 ist dabei derart am Gestell 3 befestigt, sodass dieser nicht in die Glasur 21 eintaucht, wie dies beispielsweise in Fig. 4 verdeutlicht ist. Dort ist der Vakuumerzeuger 13 an der Oberseite des Gestells angeordnet. Mittels Leitungen 14 in Form von Schläuchen und/oder Rohren ist der Vakuumerzeuger 13 mit den jeweiligen Vakuumsaugern verbunden.

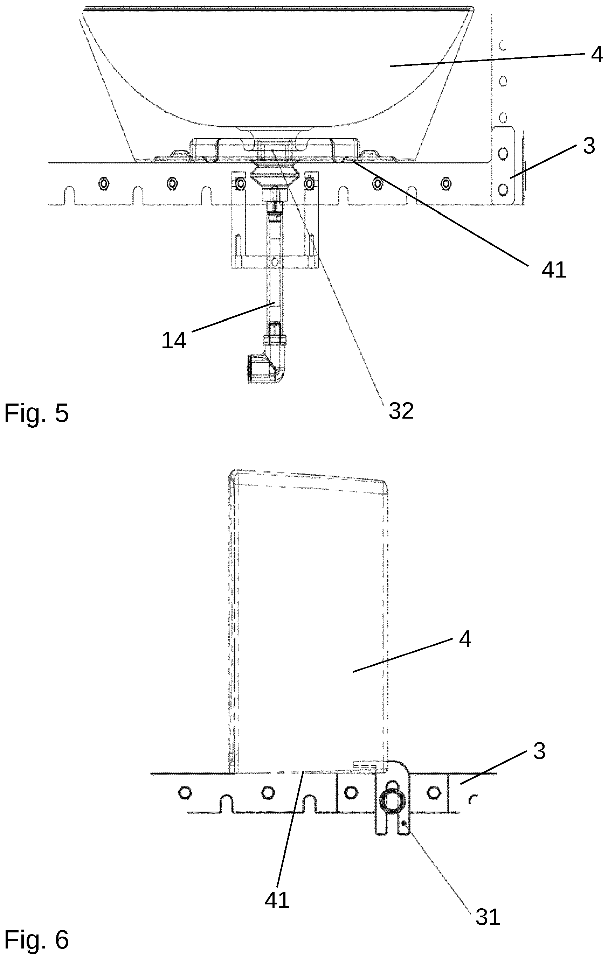

In Fig. 5 ist eine schematische Vorderansicht eines Rohlings 4 im austauschbaren Gestell 3 mit Saugvorrichtung dargestellt. Dazu weist das austauschbare Gestell 3, wie oben beschrieben, einen Sauger 32 bzw. Vakuumsauger auf. Auf diesen Sauger 32 wird die Auflagefläche 41 des Rohlings 4, vorzugsweise zentrisch, angeordnet. Der Sauger 32 ist mittels einer Leitung 14 mit dem Vakuumerzeuger 13 verbunden. Das durch den Vakuumerzeuger 13 entstandene Vakuum saugt die Rohlinge 4 an das austauschbare Gestell 3 an und sichert die Rohlinge 4 vor Aufschwimmen und/oder Verrutschen und/oder Umkippen.

In einer alternativen Ausgestaltung kann vorgesehen sein, dass die Rohlinge 4 mittels einer oder mehreren Klemmen 31 an dem austauschbaren Gestell 3 befestigt werden. Dies ist beispielsweise in Fig. 6 dargestellt. Die Klemme 31 weist dazu eine Kontaktfläche auf, welche auf dem Rohling 4 aufliegt. Vorzugsweise ist die Kontaktfläche gummiert ausgestaltet, sodass diese keine Kratzer im Rohling 4 verursacht. Zudem weist die Klemme 31 ein Bohrloch und/oder ein Langlangloch und/oder eine Nut auf. Bei der in Fig. 6 dargestellten Klemme 31 handelt es sich um eine Nut. Durch diese Nut wird eine Schraube geführt, welche an dem Gestell 3 vorgesehenen Gewindebohrungen verschraubt wird. Alternativ kann die Schraube auch durch ein am Gestell 3 vorgesehenes Durchgangsloch geführt und mit einer Mutter gekontert werden. Um den Rohling 4 sicher gegen Aufschwimmen und/oder Verrutschen und/oder Umkippen zu sichern, sind vorzugsweise mindestens zwei Klemmen 31 nötig, welche bevorzugt auf einander gegenüberliegenden Seiten des Gestells 3 angeordnet sind.

### Bezugszeichenliste

- 1: Tauchglasiervorrichtung
- 11: Roboterarm
- 12: Wechselvorrichtung
- 13: Vakuumerzeuger
- 14: Leitung

- 2: Tauchbecken
- 21: Glasur
- 22: Glasurspiegel

- 3: austauschbares Gestell
- 31: Klemme
- 32: Sauger

- 4: Rohling
- 41: Auflagefläche bzw. Aufstellfläche

## Patentansprüche

1. Verfahren zum Glasieren von Sanitärkeramik, wobei in einem auswechselbaren Gestell (3) zumindest ein zu glasierender Rohling (4) einer Sanitärkeramik angeordnet wird und in ein mit Glasur (21) gefülltes Tauchbecken (2) eingetaucht wird,
wobei das auswechselbare Gestell (3) an einem Roboterarm (11) und/oder Linearantrieb mittels einer Wechselvorrichtung (12) montiert wird und wobei das auswechselbare Gestell (3) mit dem zumindest einen darin angeordneten zu glasierenden Rohling (4) mittels des Roboterarms (11) und/oder des Linearantriebs in einer linearen geradlinigen Bewegung in die Glasur (21) des Tauchbeckens (2) eingetaucht wird und/oder aus der Glasur (21) entnommen wird und
dass das auswechselbare Gestell (3) mit dem darin angeordneten zumindest einen Rohling (4) unter einem vordefinierten Eintauchwinkel in die Glasur (21) eingetaucht wird und/oder unter einem vordefinierten Austauchwinkel aus der Glasur (21) entnommen wird, vorzugsweise dass der Eintauchwinkel einstellbar ist.

2. Verfahren zum Glasieren von Sanitärkeramik nach Anspruch 1,
**dadurch gekennzeichnet,**
**dass** der zumindest eine zu glasierende Rohling (4) manuell und/oder maschinell in dem auswechselbaren Gestell (3) angeordnet wird.

3. Verfahren zum Glasieren von Sanitärkeramik nach einem der vorhergehenden Ansprüche,
**dadurch gekennzeichnet,**
**dass** der zumindest eine zu glasierende Rohling (4) mittels Klemmen (31) und/oder Sauger (32), insbesondere Vakuumsauger, in dem auswechselbaren Gestell (3) gehaltert wird.

4. Verfahren zum Glasieren von Sanitärkeramik nach einem der vorhergehenden Ansprüche,
**dadurch gekennzeichnet,**
**dass** der zumindest eine zu glasierende Rohling (4) eine nicht zu glasierende Fläche aufweist, welche als Auflagefläche (41) oder Aufstellfläche (41) am Gestell (3) dient, vorzugsweise handelt es sich bei der nicht zu glasierenden Fläche um eine Montagefläche.

5. Verfahren zum Glasieren von Sanitärkeramik nach einem der vorhergehenden Ansprüche,
**dadurch gekennzeichnet,**
**dass** das auswechselbare Gestell (3) mit einer vordefinierten Geschwindigkeit mittels des Roboterarms (11) und/oder des Linearantriebs eingetaucht wird und/oder entnommen wird, insbesondere wobei die vordefinierte Geschwindigkeit in einem Bereich von 50 mm/s bis 150 mm/s, bevorzugt von 80 mm/s bis 120 mm/s liegt.

6. Verfahren zum Glasieren von Sanitärkeramik nach einem der vorhergehenden Ansprüche,
**dadurch gekennzeichnet,**
**dass** der zumindest eine zu glasierende Rohling (4) nach dem Eintauchen in das Tauchbecken (2) für eine vorbestimmte Zeitdauer in der Glasur (21) verweilt, insbesondere wobei die vorbestimmte Zeitdauer in einem Bereich von 2 s bis 10 s, bevorzugt von 4 s bis 6 s, liegt.

7. Verfahren zum Glasieren von Sanitärkeramik nach einem der vorhergehenden Ansprüche,
**dadurch gekennzeichnet,**
**dass** der zumindest eine zu glasierende Rohling (4) mehrmals hintereinander in das Tauchbecken (2) eingetaucht und/oder aus dem Tauchbecken (2) herausgenommen wird, wobei eine vordefinierte Verweilzeit außerhalb der Glasur (21) vorgesehen ist, welche in einem Bereich von 1 s bis 10 s, insbesondere von 2 s bis 5 s liegt.

8. Verfahren zum Glasieren von Sanitärkeramik nach einem der vorhergehenden Ansprüche,
**dadurch gekennzeichnet,**
**dass** der zumindest eine fertig glasierte Rohling (4) manuell und/oder maschinell aus dem auswechselbaren Gestell (3) entnommen wird, und/oder dass der zumindest eine fertig glasierte Rohling (4) an seiner Auflagefläche (41) manuell und/oder maschinell abgeschwammt wird.

9. Verfahren zum Glasieren von Sanitärkeramik nach einem der vorhergehenden Ansprüche,
**dadurch gekennzeichnet,**
**dass** das auswechselbare Gestell (3) mit dem zumindest einen fertig glasierten Rohling (4) mittels der Wechselvorrichtung (12) an einem Trocknungsplatz zum Antrocknen der Glasur (21) abgestellt wird und anschließend ein weiteres auswechselbares Gestell (3) mit zumindest einem zu glasierenden Rohling (4) mittels der Wechselvorrichtung (12) an den Roboterarm (11) und/oder dem Linearantrieb montiert wird bzw. aufgenommen wird.

10. Tauchglasiervorrichtung (1) für Sanitärkeramik,
mit einem auswechselbaren Gestell (3), in dem zumindest ein zu glasierender Rohling (4) angeordnet ist,
und mit einem Tauchbecken (2) mit Glasur (21), um den zumindest einen Rohling (4) durch Eintauchen in das Tauchbecken (2) zu glasieren, wobei das auswechselbare Gestell (3) an einem Roboterarm (11) und/oder Linearantrieb mittels einer Wechselvorrichtung (12) montiert ist und dass eine Steuerungsvorrichtung vorgesehen ist, die den Roboterarm (11) und/oder den Linearantrieb derart steuert, dass der Roboterarm (11) und/oder der Linearantrieb mittels einer linearen geradlinigen Bewegung das auswechselbare Gestell (3) mit dem zumindest einen darin angeordneten zu glasierenden Rohling (4) in die Glasur (21) des Tauchbeckens (2) eintaucht und/oder aus der Glasur (21) entnimmt und
dass die Steuerungsvorrichtung den Roboterarm (11) und/oder den Linearantrieb derart ansteuert, dass der Roboterarm (11) und/oder der Linearantrieb das auswechselbare Gestell (3) mit dem darin angeordneten zumindest einen Rohling (4) unter einem vordefinierten Eintauchwinkel in die Glasur (21) eintaucht und/oder unter einem vordefinierten Austauchwinkel aus der Glasur (21) entnimmt.

11. Tauchglasiervorrichtung (1) für Sanitärkeramik nach Anspruch 10,
**dadurch gekennzeichnet,**
**dass** das auswechselbare Gestell (3) zumindest eine Klemme (31) und/oder zumindest einen Sauger (32), insbesondere Vakuumsauger, umfasst, mit dem der zumindest eine zu glasierende Rohling (4) in dem auswechselbaren Gestell (3) gehaltert ist.

12. Tauchglasiervorrichtung (1) für Sanitärkeramik nach Anspruch 11,
**dadurch gekennzeichnet,**
**dass** die Tauchglasiervorrichtung (1) einen Vakuumerzeuger (13) aufweist, insbesondere welcher an dem auswechselbaren Gestell (3) oder dem Roboterarm (11) und/oder dem Linearantrieb angeordnet ist, wobei der Vakuumerzeuger (13) mittels einer Leitung (14) mit dem zumindest einen Sauger (32), insbesondere Vakuumsauger, verbunden ist.

13. Tauchglasiervorrichtung (1) für Sanitärkeramik nach einem der Ansprüche 10 bis 12,
**dadurch gekennzeichnet,**
**dass** die Steuerungsvorrichtung den Roboterarm (11) und/oder den Linearantrieb derart ansteuert, dass der Roboterarm (11) und/oder der Linearantrieb das auswechselbare Gestell (3) mit einer vordefinierten Geschwindigkeit eintaucht und/oder entnimmt, insbesondere wobei die vordefinierte Geschwindigkeit in einem Bereich von 50 mm/s bis 150 mm/s, bevorzugt von 80 mm/s bis 120 mm/s liegt.

14. Tauchglasiervorrichtung (1) für Sanitärkeramik nach einem der Ansprüche 10 bis 13,
**dadurch gekennzeichnet,**
**dass** die Steuerungsvorrichtung den Roboterarm (11) und/oder den Linearantrieb derart ansteuert, sodass der zumindest eine zu glasierende Rohling (4) nach dem Eintauchen in das Tauchbecken (2) für eine vorbestimmte Zeitdauer in der Glasur (21) verweilt, insbesondere wobei die vorbestimmte Zeitdauer in einem Bereich von 2 s bis 10 s, bevorzugt von 4 s bis 6 s, liegt.

15. Tauchglasiervorrichtung (1) für Sanitärkeramik nach einem der Ansprüche 10 bis 14,
**dadurch gekennzeichnet,**
**dass** die Steuerungsvorrichtung den Roboterarm (11) und/oder den Linearantrieb derart ansteuert, dass der Roboterarm (11) und/oder der Linearantrieb den zumindest einen zu glasierenden Rohling (4) mehrmals in das Tauchbecken (2) eintaucht und/oder aus dem Tauchbecken (2) entnimmt, wobei eine vordefinierte Verweilzeit außerhalb der Glasur (21) vorgesehen ist, welche in einem Bereich von 1 s bis 10 s, insbesondere von 2 s bis 5 s liegt.

16. Tauchglasiervorrichtung (1) für Sanitärkeramik nach einem der Ansprüche10 bis 15,
**dadurch gekennzeichnet,**
**dass** die Steuerungsvorrichtung den Roboterarm (11) und/oder den Linearantrieb derart ansteuert, dass der Roboterarm (11) und/oder der Linearantrieb das auswechselbare Gestell (3) mit dem zumindest einen fertig glasierten Rohling (4) mittels der Wechselvorrichtung (12) an einem Trocknungsplatz zum Antrocknen der Glasur (21) abstellt und/oder ein weiteres auswechselbares Gestell (3) mit zumindest einem zu glasierenden Rohling (4) mittels der Wechselvorrichtung (12) an den Roboterarm (11) und/oder dem Linearantrieb aufnimmt.
